# EUROPEAN PATENT SPECIFICATION

(11) **EP 2 981 855 B1**
(45) Date of publication and mention of the grant of the patent: **20.11.2019**
(21) Application number: 14779820.1
(22) Date of filing: 04.04.2014
(51) Int. Cl.: G01W 1/10, G01C 21/36

(54) **METHOD FOR GENERATING AND DISPLAYING A NOWCAST IN SELECTABLE TIME INCREMENTS**
VERFAHREN ZUR ERZEUGUNG UND ANZEIGE EINES NOWCAST BEI WÄHLBAREN ZEITSCHRITTWEITEN
PROCÉDÉ POUR GÉNÉRER ET AFFICHER UNE PRÉVISION IMMÉDIATE SELON DES INCRÉMENTS DE TEMPS SÉLECTIONNABLES

(30) Priority: 04.04.2013 US 201313856923; 16.06.2013 US 201361835626 P; 19.06.2013 US 201361836713 P; 20.06.2013 US 201313922800; 26.06.2013 US 201361839675 P; 22.07.2013 US 201313947331
(43) Date of publication of application: 10.02.2016
(73) Proprietor: Sky Motion Research, ULC, Montreal, Québec H3A 1P8 (CA)
(72) Inventor: LEBLANC, Andre, Montreal, Québec H3R 1Z6 (CA)
(74) Representative: Schulte, Drew Joseph
(86) International application number: PCT/CA2014/000330
(87) International publication number: WO 2014/161081

(56) References cited:
- CA-A1- 2 514 868
- US-A1- 2004 043 760
- US-A1- 2009 210 353
- US-B1- 6 298 307
- US-B1- 7 542 852
- US-B1- 8 332 084
- US-B2- 6 590 529
- US-B2- 6 590 529
- US-B2- 6 985 837
- QHTANI, ABDULRAHMAN: 'WeatherSpark' 25 February 2012, XP054976623 Retrieved from the Internet: <URL:https://www.youtube.com/watch?v=6LZjaw eaXyc> [retrieved on 2014-06-18]

## Description

### CROSS-REFERENCE TO RELATED APPLICATIONS

This application claims priority of co-owned and co-invented U.S. Patent Application No. 13/856,923 filed on April 4, 2013, U.S. Patent Application No. 13/922,800, filed on June 20, 2013, U.S. Patent Application No. 13/947,331, filed on July 22, 2013, U.S. Provisional Application No. 61/839,675, filed on June 26, 2013, U.S. Provisional Application No. 61/835,626, filed on June 16, 2013, and U.S. Provisional Application No. 61/836,713, filed on June 19, 2013.

### BACKGROUND

### (a) Field

The subject matter disclosed generally relates to methods for producing weather forecasts. More specifically, the subject matter relates to software applications for producing weather forecasts.

### (b) Related Prior Art

Conventional weather forecasting systems provide weather predictions twelve hours to a few days from the present time. If one needs a short term forecast or a forecast with a fine time scale, the best information available usually is an hourly forecast for the day.

Conventional weather forecasts are average forecasts for the area for which they are generated. Thus, a forecast may be inaccurate for a precise location within this area, and even the present weather displayed for an area may differ from the actual weather for a precise location within this area.

Moreover, conventional weather forecasts are displayed at a time scale that is too coarse to allow a user to know when a weather event takes place in a precise location and time. Even for hourly conventional weather forecasts, it is impossible for the user to know if the forecasted weather event lasts one hour or one minute and, for the latter, at what time it takes place exactly within the hour.

US 2004/043760 A1 discloses a method for providing location-based nowcast, comprising the steps of: a) initiation of a request, by an end-user, for a time evolution of user-selected nowcast weather parameters, the transmission of the request being made over a public communication network to a nowcast request processor; b) the determination of the end-user's actual location by the nowcast request processor; c) the nowcast request processor gathering raw weather data from data sources; d) processing the raw data into a time-series of nowcast parameter maps; e) extracting the time evolution of the user requested nowcast parameters from the time-series of nowcast parameter maps by positioning the end-user's location on said time series; and f) distributing the requested information to end-user regarding the user-selected nowcast parameters within the extracted time evolution.

US 8,332,084 B1 discloses a method of determining environmental data along a trajectory of an aircraft which may assist in the evaluation of flight conditions along the trajectory. Environmental data may be at least one of collected, derived, and fused from a plurality of weather sources using at least one processor. The environmental data may be filtered, extrapolated, and fused, using the at least one processor, within at least one selected volume of airspace over a trajectory of the aircraft based on selected weather-applicability time intervals, and on at least one of user-selected parameters and weighted environmental data criteria. The trajectory may comprise at least one of a planned trajectory, a current trajectory, and an intent trajectory of the aircraft. An effect of the filtered, extrapolated, and fused environmental data on the trajectory may be determined using the at least one processor.

US 2009/210353 A1 discloses a method and system configured to receive, process, compile, and transmit weather information to selected users. The weather information is generally received from a remote weather information database, processed by at least one real-time data server, and transmitted through a communication module to a plurality of users in accordance with predetermined parameters that may be set by the users themselves.

There is a need in the market for the generation and display of short term weather forecasts at different time scales.

### SUMMARY

The present embodiments describe such a method.

According to an embodiment, there is provided a computer implemented method for outputting a chronological succession of weather forecasts as defined in claim 1.

According to an embodiment, generating the succession of weather forecasts for the time intervals between the specific times comprises selecting among the forecasted weather values prepared at the default time increment at least one of the forecasted weather values prepared for each specific time.

According to another embodiment, generating the succession of weather forecasts for the time intervals between the specific times comprises averaging weather values prepared for times that are within a time range which includes each specific time and selected among the forecasted weather values prepared at the default time increment.

According to an embodiment, outputting the succession of weather forecasts comprises presenting the succession of weather forecasts to the user.

According to an embodiment, outputting the succession of weather forecasts comprises outputting the succession of weather forecasts over a given period smaller than 6 hours.

According to an embodiment, receiving a choice of a time increment comprises receiving a time increment saved from a previous use.

According to an embodiment, generating the succession of weather forecasts at the chosen time increment comprises generating the succession of weather forecasts at a chosen time increment of 1 minute, 5 minutes, 15 minutes or 30 minutes.

According to an embodiment, receiving a choice of a time increment comprises receiving a choice of a time increment which is variable over the given period.

According to an embodiment, generating the succession of weather forecasts starting at the given time comprises generating the succession of weather forecasts starting at a current time.

According to an embodiment, outputting a succession of weather forecasts for a given territory comprises outputting a succession of weather forecasts for a very small region defined as having a resolution ranging between 5 meters and 1,000 meters.

According to an embodiment, outputting a succession of weather forecasts for a very small region comprises outputting a succession of weather forecasts for a current location of the user.

According to an embodiment, outputting a succession of weather forecasts for a current location of the user comprises outputting a succession of weather forecasts for a current location which is determined through a computing device which is enabled for localization by a communication network or through a GPS navigation device.

According to an embodiment, receiving a choice of a time increment from a user comprises receiving any real number specified by the user.

In another aspect, there is provided a system for outputting a chronological succession of weather forecasts as defined in claim 13.

### Definitions

In the present specification, the following terms are meant to be defined as indicated below:
Nowcasting: The term *nowcasting* is a contraction of "now" and "forecasting"; it refers to the sets of techniques devised to make short term forecasts, typically in the 0 to 12 hour range.

A nowcaster or system for preparing nowcasts is a weather forecasting device which prepares very short term (e.g., 1 min., 5 mins., 15 mins., 30 mins., etc.) forecasts for a very small region on Earth (resolution of 5 meters, 10 meters, 50 meters, 100 meters, 500 meters, 1,000 meters, etc.). The nowcaster comprises a weather values forecaster for preparing forecasted weather values and a weather forecast generator for generating weather forecasts by selecting forecasted weather values among the forecasted weather values that have been prepared.

A weather value a weather related quantity or attribute of any sort such as a precipitation rate, a precipitation type, a precipitation probability, a temperature, a pressure, a relative humidity, a wind velocity, a wind direction, a value relative to a lightning, a value relative to hail, a value relative to a microburst, an accumulation, a cloud cover, etc.

A forecasted weather value is a weather value that is predicted by the nowcaster. The forecasted weather value relates to a time or to a time interval.

A weather forecast is a set of one or more forecasted weather values that are displayable to users. The weather forecast relates to a time or to a time interval.

A user is a person to whom or a machine to which a weather forecast is forwarded.

A weather-related event is, for example, at least one of hail, a wind gust, lightning, a temperature change, etc.

Precipitation type (PType): indicates the type of precipitation. Examples of precipitation types include, but are not limited to, rain, snow, hail, freezing rain, ice pellets, ice crystals.

Precipitation rate (PRate): indicates the precipitation intensity. Examples of precipitation rate values include, but are not limited to, no (i.e., none), light, moderate, heavy, extreme. In an embodiment, the precipitation rate can also be expressed as a range of values such as: none to light, light to moderate, moderate to heavy, or any combination of the above.

Precipitation probability: indicates the probability that precipitation might occur. Examples of precipitation probability values include, but are not limited to, no, unlikely, slight chance of, chance of, likely, very likely, certain,.

In an embodiment, the precipitation probability can also be expressed as a range of values such as: none to light, light to moderate, moderate to heavy. Precipitation probability may also be expressed in terms of percentages; e.g., 0%, 25%, 50%, 75%, 100%; or ranges of percentages; e.g., 0% to 25%, 25% to 50%, 50% to 75%, 75% to 100%. In an embodiment, the precipitation probability may be taken from a probability distribution.

Precipitation type and precipitation rate categories (PTypeRate): a PTypeRate category is combination of precipitation type and precipitation rate to which may be associated a probability of occurrence for a given period to indicate the possibility of receiving a certain type of precipitation at a certain rate.

Throughout the specification and claims, the following terms take the meanings explicitly associated herein, unless the context clearly dictates otherwise. The phrase "in one embodiment" as used herein does not necessarily refer to the same embodiment, though it may. Furthermore, the phrase "in another embodiment" as used herein does not necessarily refer to a different embodiment, although it may. Thus, as described below, various embodiments of the invention may be readily combined, without departing from the scope or spirit of the invention. The term "comprising" and "including" should be interpreted to mean: including but not limited to.

In addition, as used herein, the term "or" is an inclusive "or" operator, and is equivalent to the term "and/or," unless the context clearly dictates otherwise. The term "based on" is not exclusive and allows for being based on additional factors not described, unless the context clearly dictates otherwise.

Features and advantages of the subject matter hereof will become more apparent in light of the following detailed description of selected embodiments, as illustrated in the accompanying figures. As will be realized, the subject matter disclosed and claimed is capable of modifications in various respects, all without departing from the scope of the claims. Accordingly, the drawings and the description are to be regarded as illustrative in nature, and not as restrictive and the full scope of the subject matter is set forth in the claims.

### BRIEF DESCRIPTION OF THE DRAWINGS

Further features and advantages of the present disclosure will become apparent from the following detailed description, taken in combination with the appended drawings, in which:
Figure 1A is a block diagram of a method for generating and displaying a nowcast in selectable time increments in accordance with an embodiment;
Figure 1B is a block diagram of a method for generating and displaying a nowcast in selectable time increments in accordance with another embodiment;
Figure 2A is a block diagram of a suitable nowcaster for implementing the embodiments;
Figure 2B is a more detailed block diagram of a suitable nowcaster for implementing the embodiments;
Figure 3 is an example of a network environment in which the embodiments may be practiced;
Figure 4 is an exemplary diagram illustrating a suitable computing operating environment in which embodiments of the invention may be practiced;
Figure 5 is a screenshot of a user interface, on which the embodiments of the method may be practiced, illustrating a weather forecast displayed with a one-minute time increment;
Figure 6 is a screenshot of a user interface, on which the embodiments of the method may be practiced, illustrating a weather forecast displayed with a five-minute time increment.

It will be noted that throughout the appended drawings, like features are identified by like reference numerals.

### DETAILED DESCRIPTION

The embodiments will now be described more fully hereinafter with reference to the accompanying drawings, which form a part hereof, and which show, by way of illustration, specific embodiments by which the embodiments may be practiced. The embodiments are also described so that the disclosure conveys the scope of the invention to those skilled in the art. The embodiments may, however, be embodied in many different forms and should not be construed as limited to the embodiments set forth herein.

Among other things, the present embodiments may be embodied as methods or devices. Accordingly, the embodiments may take the form of an entirely hardware embodiment, an entirely software embodiment, an embodiment combining software and hardware aspects, etc. Furthermore, although the embodiments are described with reference to a portable or handheld device, they may also be implemented on desktops, laptop computers, tablet devices or any computing device having sufficient computing resources to implement the embodiments.

Briefly stated, the present embodiments describe a computer implemented method for generating and displaying a nowcast in selectable time increments. The user of the method selects a time increment and the weather forecast is outputted following the selected time increment. The weather forecast is generated by a short-term weather forecaster known as system for preparing nowcasts or nowcaster, described more thoroughly hereinbelow.

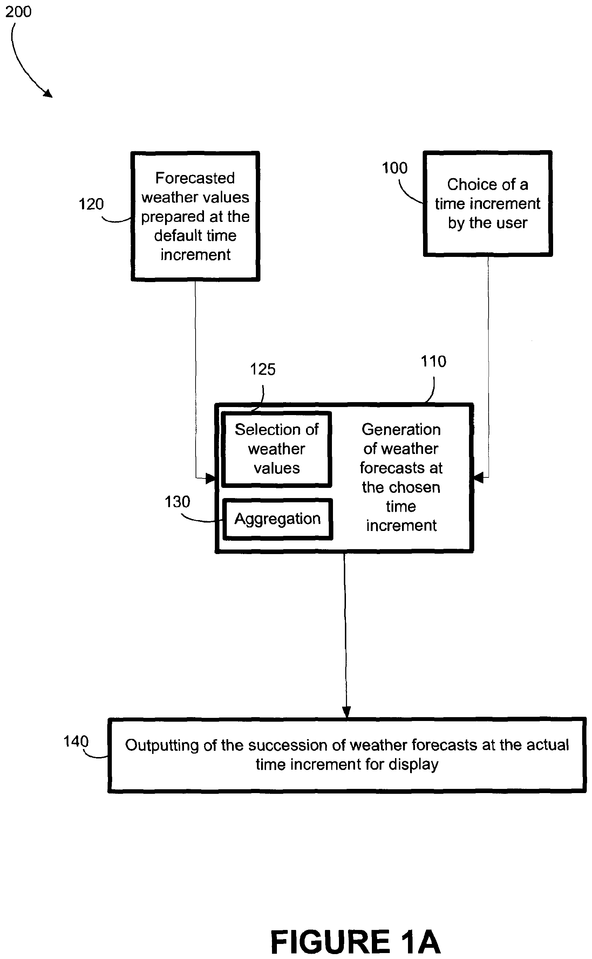

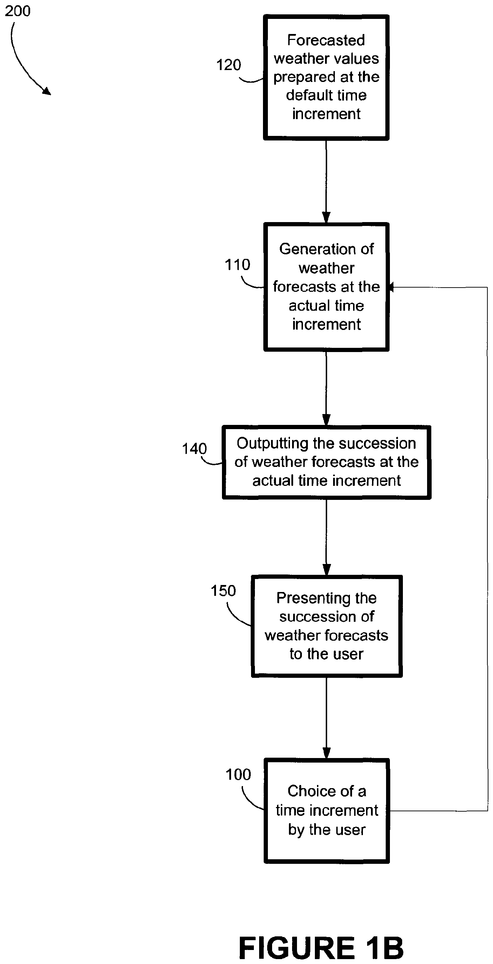

Figure 1A is a block diagram of a method for generating and displaying a nowcast in selectable time increments in accordance with an embodiment. The method shown in Figure 1 is implemented within the nowcaster **200.** Forecasted weather values **120** are prepared within the nowcaster **200.** The forecasted weather values **120** start from a given time are prepared over a given period at the default time increment for a given territory. In an embodiment, the given time is a current time. In an embodiment, the default time increment is the finest time increment, for example one minute. In another embodiment, it is possible to have a chosen time increment **100** which is smaller than the default time increment, in which case an interpolation is required.

According to the embodiment, the forecasted weather values may be prepared within the method, but they may also be prepared by a weather value forecaster that is not a part of the method, in which case the method described herein comprises receiving the forecasted weather values.

Figure 1A further illustrates the user choosing a time increment **100.** The choice is made through a user interface. The chosen time increment **100** is most often (but not necessarily) equal to or greater than the default characterizing the forecasted weather values **120.**

According to an embodiment, the time increment may be memorized, for later retrieving the memorized time increment instead of prompting the user for a choice, thus allowing using a time increment saved from a previous use of the method.

According to an embodiment, the chosen time increment **100** may include a plurality of chosen time increments, allowing the generation **110** of weather forecasts to be done with a time increment that is variable across the given period over which the weather forecasts are generated. For example, the weather forecasts may be generated and outputted for a time increment of 1 minute for the first 5 minutes, then changing to a time increment of 5 minutes during the first hour, then changing to a time increment of 30 minutes for the next hours.

Once the forecasted weather values **120** and the chosen time increment **100** are both known, the method is ready for the generation **110** of weather forecasts at the chosen time increment. According to an embodiment, the generation **110** of weather forecasts may comprise two steps, as illustrated by Figure 1A. Since forecasted weather values are not all relevant for a user, a selection **125** of weather values is performed to keep only relevant values for the weather forecasts eventually outputted by the method. The aggregation **130** may then take place.

The aggregation **130** is the part of the method that transforms the list of relevant forecasted weather values resulting from selection **125** generated for the default time increment into a list of forecasted weather values **120** with the chosen time increment **100,** which is coarser than the default time increment; i.e., the chosen time increment **100** is greater than or equal to the default time increment.

According to an embodiment, the aggregation **130** is precipitation-oriented, meaning that when the aggregation **130** takes place, it verifies if a precipitation is likely to take place within the chosen time increment **100,** and if the answer is yes, then the precipitation type and rate that might happen during the chosen time increment **100** will be outputted. For example, in this embodiment, if the default time increment for the forecasted weather values **120** is one minute, and if the user chooses a five-minute time increment **100,** the aggregation **130** will check the five forecasted weather values **120** that have been generated within that time frame and check for a forecasted precipitation. If four forecasted weather values **120** are "no precipitation" and one is "risk of light rain" for example, and then the aggregation **130** will allow the output **140** of a risk of light rain.

In other words, the chosen time increment defines a succession of times, called specific times, which start at the given time (which may be or not the current time) and for subsequent times separated by the chosen time increment **100.** The succession of specific times may be used to separate time intervals for which the succession of weather forecasts is generated. The method comprises selecting among the forecasted weather values prepared at the default time increment at least one of the forecasted weather values prepared for each specific time.

According to another embodiment, the aggregation **130** may comprise averaging the forecasted weather values **120** that are within the chosen time increment **100.** For example, in this embodiment, if the default time increment for the forecasted weather values **120** is one minute, and if the user chooses a five-minute time increment **100,** the aggregation **130** will comprise averaging the five forecasted weather values **120** of the same type (e.g. five temperature values, or five pressure values, or five PTypeRate values, etc.) that have been generated within that time frame and that mean will be used for the display of the chronological succession of weather forecasts. Averaging weather values may comprise computing an arithmetic mean or a geometric mean. It would be possible to avoid using all the weather values for averaging.

In other words, this embodiment may still use the specific times and time intervals separated by the specific times as defined for the previous embodiment described hereinabove. The succession of weather forecasts is generated for the time intervals between these specific times. In this embodiment, for each specific time, the method comprises selecting among the forecasted weather values prepared at the default time increment for times that are within a time range which includes each specific time, and then averaging these weather values to generate a weather forecast for this time interval. During display, this weather forecast may be associated to the closest specific time instead of the time interval, for the convenience of the user.

In other embodiments, the aggregation **130** may comprise other algorithms or selection rules to determine how the forecasted weather values **120** generated for the fine default time increment are aggregated to the coarser chosen time increment **100.**

The outputting **140** may comprise displaying the succession of weather forecast relatively to a given period. According to an embodiment, this given period may change according to the chosen time increment **100.**

The output **140** may be updated at a given frequency to allow the user to know the most recent succession of weather forecasts.

According to other embodiments, the outputting **140** may comprise saving the succession of weather forecasts, or sending it to another computer.

According to an embodiment, the chosen time increment **100** may vary across the given period over which the succession of weather forecasts is outputted.

Figure 1B illustrates a different embodiment on which the method is embedded. The difference with the embodiment presented in Figure 1A lies in the fact that the choice of a time increment **100** is not done at the beginning of the method. In the present embodiment, once the forecasted weather values **120** are known, the default time increment of the weather values is considered for the generation **110** of weather forecasts at the default time increment. The outputting **140** of the succession of weather forecasts occurs for presenting **150** to the user. Then the user may choose the time increment **100.** This choice brings the method back to the generation **110** of weather forecasts at the actual time increment, followed by the outputting **140** and the presenting **150** of the succession of weather forecasts at the actual time increment, until the user chooses a new time increment **100.**

### Nowcaster

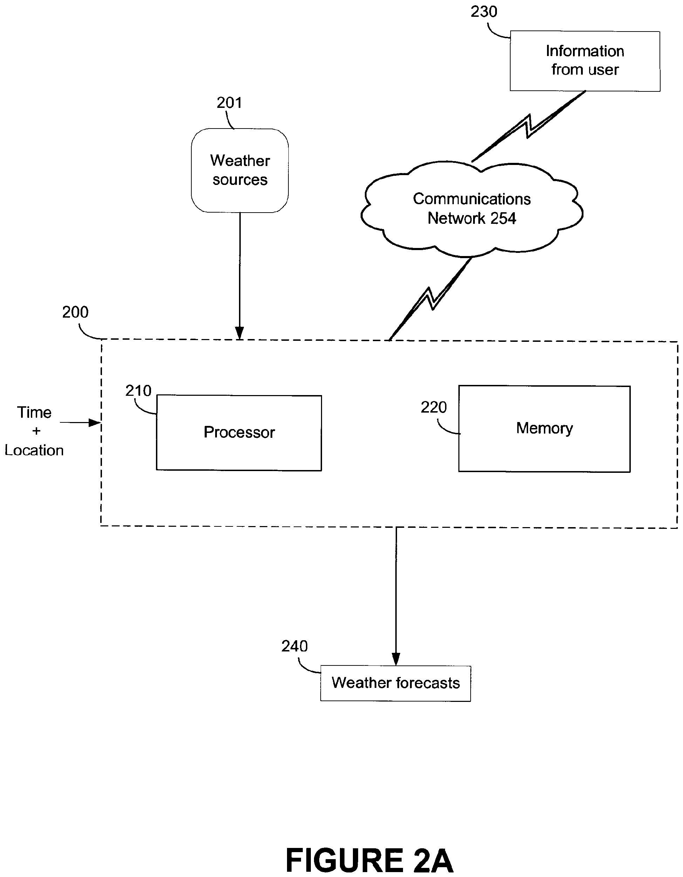

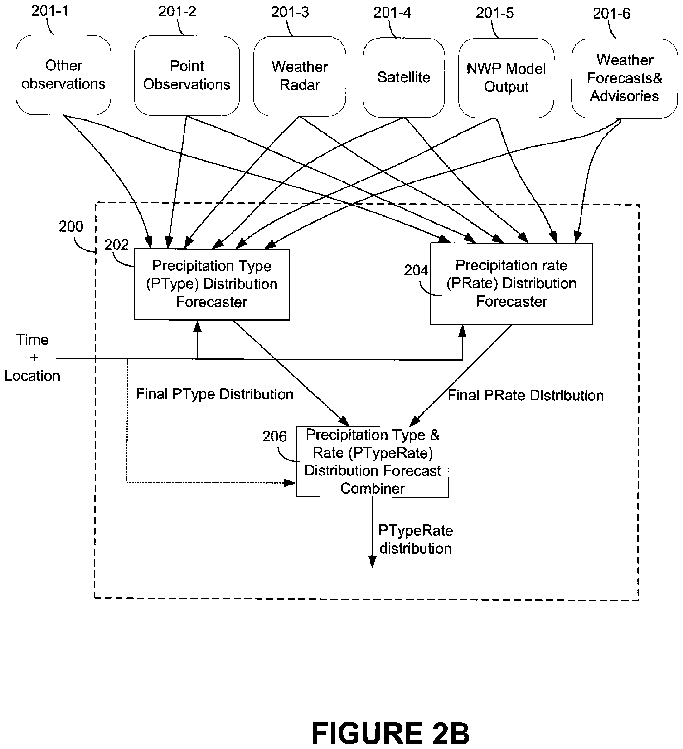

Figure 2A and 2B are block diagrams of a suitable nowcaster **200** such as that described in co-owned and co-invented US patent application No. 13/856923 filed on April 4, 2013.

As shown in Figure 2A and 2B, the nowcaster **200** receives weather observations from different sources **201** such as weather observations sources including but not limited to: point observations **201-2** (e.g. feedback provided by users and automated stations), weather radars **201-3,** satellites **201-4** and other types of weather observations **201-1,** and weather forecast sources such as numerical weather prediction (NWP) model output **201-5** and weather forecasts and advisories **201-6.**

The nowcaster **200** comprises a memory **220** and a processor **210.** The memory **220** comprises the instructions for the method and also stores data from the weather sources **201,** intermediate results and weather forecasts. The processor **210** allows the nowcaster **200** to perform calculations.

The nowcaster **200** can receive information **230** from a user through a communication network **254.** According to an embodiment, this information **230** may be the chosen time increment **100.**

The nowcaster **200** outputs a weather forecast, or a succession of weather forecasts.

In an embodiment, the nowcaster **200** comprises a PType distribution forecaster **202** and a PRate distribution forecaster **204.** The PType forecaster **202** receives the weather observations from the different sources **201** and outputs a probability distribution of precipitation type over an interval of time, for a given latitude and longitude (and/or location). For example:
a. Snow: 10%
b. Rain: 30%
c. Freezing Rain: 60%
d. Hail: 0%
e. Ice Pellets: 0%

Similarly, the PRate forecaster **204** receives the weather observations for a given latitude and longitude from the different sources **201** and outputs a probability distribution forecast of a precipitation rate (PRate) in a representation that expresses the uncertainty. For example, the PRate may be output as a probability distribution of precipitation rates or a range of rates over an interval of time, for a given latitude and longitude. For example:
f. No Precip: 30%
g. Light: 40%
h. Moderate: 20%
i. Heavy: 10%

The PRate and PType values output by the PRate forecaster **204** and the PType forecaster **202** are sent to a forecast combiner **206** to combine these values into a single value PTypeRate which represents the precipitation outcomes. For example, if the value of PType is "Snow", and the value of "PRate" is heavy, the combined value of PTypeRate may be "heavy snow".

For a given latitude and longitude, the system outputs forecasted PTypeRate Distributions for predefined time intervals, either fixed (ex: 1 minute) or variable (ex: 1 minute, then 5 minutes, then 10 minutes, etc). The system can either pre-calculate and store forecasted PTypeRate Distributions in a sequence of time intervals, or calculate it on the fly. A PTypeRate Distribution represents, for each time interval, the certainty or uncertainty that a PTypeRate will occur.

With reference to Figure 2B, the forecast combiner **206** receives the final PRate distribution from the PType forecaster **202** and the final PRate distribution from the PRate forecaster **204** to combine them into a group of PTypeRate distribution values each representing the probability of receiving a certain type of precipitation at a certain rate. An example is provided below.

Assuming that the PType distribution is as follows: Snow: 50%, Rain 0%, Freezing rain: 30%, Hail 0%, Ice pellets 20%, and the PRate distribution is as follows: None: 0%, light: 10%, moderate:20%, Heavy: 30%, Very heavy 40%, the PTypeRate distributions may be as follows:

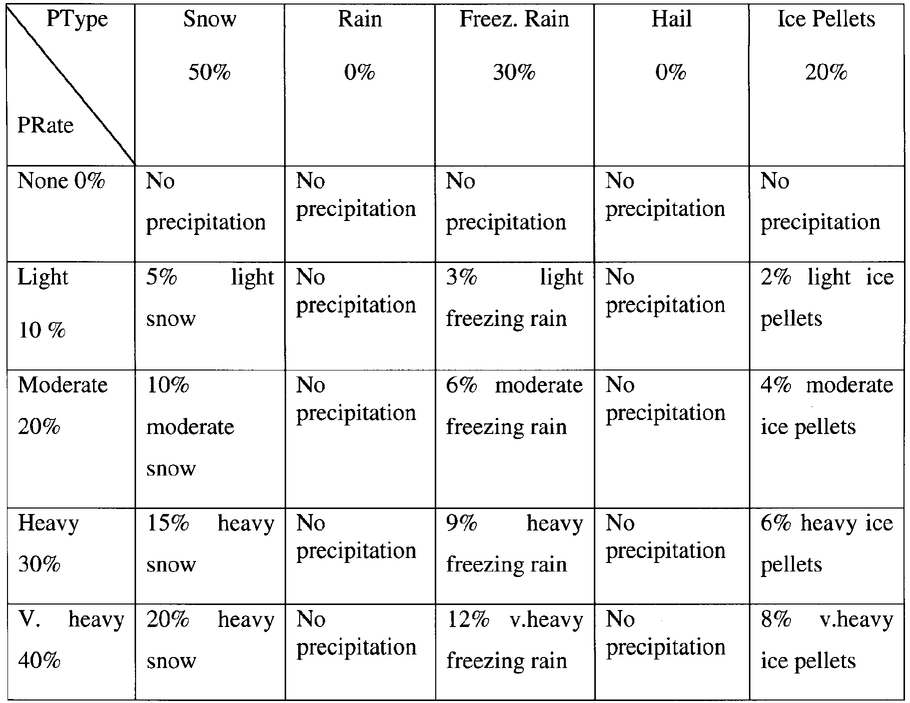

Accordingly, the forecast combiner **206** multiplies the probability of each type of precipitation by the probability of each rate of precipitation to obtain a probability of receiving a certain type of precipitation at a certain rate for example, 20% chance of heavy snow, or 12% chance of very heavy freezing rain. In an embodiment, it is possible to associate probability ranges with textual information for displaying the textual information to the user instead of the probabilities in numbers. For example, probabilities that are between 5% and 15% may be associated with the text: "low chance", while probabilities that are between 40% and 70% may be associated with the text "high chance", or "very likely" etc. whereby, instead of displaying: 60% chance of heavy snow, it is possible to display: "high chance of heavy snow".

In another embodiment, it is possible to combine two or more different PTypeRates along one or more dimensions (the dimensions including: the rate, type, or probability). For example, results of such combination may include: Likely light to moderate rain, Likely light to moderate rain or heavy snow; Likely moderate rain or snow; likely rain or snow; chance of light to moderate rain or heavy snow or light hail; chance of moderate rain, snow or hail; chance of rain, snow or hail, etc.

Accordingly, the nowcaster **200** receives the location for which the nowcasts are needed and the time and/or time interval for which the nowcasts are needed and outputs the PTypeRate distribution for the given location and for the specific time.

In another embodiment, it is possible to combine two or more different PTypeRates along one or more dimensions (the dimensions including: the rate, type, or probability). For example, results of such combination may include: Likely light to moderate rain, Likely light to moderate rain or heavy snow; Likely moderate rain or snow; likely rain or snow; chance of light to moderate rain or heavy snow or light hail; chance of moderate rain, snow or hail; chance of rain, snow or hail, etc.

Accordingly, the nowcaster **200** receives the location for which the nowcasts are needed and the time and/or time interval for which the nowcasts are needed and outputs the PtypRate distribution for the given location and for the specific time.

There may be another embodiment of the nowcaster 200. In this embodiment, the nowcaster comprises a PType selector/receiver and a PRate distribution forecaster. Similar to the embodiment shown in Figure 2B, the PRate distribution forecaster receives the weather observations for a given latitude and longitude from the different sources and outputs a probability distribution forecast of a precipitation rate (PRate) in a representation that expresses the uncertainty. For example, the PRate may be output as a probability distribution of precipitation rates or a range of rates over an interval of time, for a given latitude and longitude. In one non-limiting example, it could be:
1) No Precip.: 30%
2) Light: 40%
3) Moderate: 20%
4) Heavy: 10%

As will be apparent to a person of ordinary skill in the art, there can be various other types and numbers of categories than the example provided above.

However, the PType selector/receiver does not output a probability distribution associated with different types of precipitation. Instead, the PType selector/receiver receives weather observations for a given latitude and longitude from the different sources to select one precipitation type from a list of different precipitation types. For example, based on the inputs received from the sources, the PType selector/receiver selects a single precipitation type that is most likely to occur in the given latitude and longitude (and/or location) from the following list of precipitation types:
1) Snow
2) Rain
3) Freezing Rain
4) Hail
5) Ice Pellets
6) Mix (e.g., a+c, a+d, b+c, a+e, c+e, d+e, etc.)

From the list of precipitation types such as the one above, only one precipitation type is selected for a given location. For example, a mix of snow and freezing rain can be selected as the most likely precipitation type for a given location at a given time. The precipitation type is not associated with a probability value. In fact, since only one precipitation type is selected for any given location and time corresponding to the location, the selected precipitation type will have the effective probability value of 100%.

The list of precipitation types that are available for selection of one type may include a mix type that represents a mix of two different precipitation types (e.g., snow and freezing rain, hail and ice pellets, etc.). A mix type is considered as a distinct precipitation type available for selection and, as shown above in (f) of the list, there can be many different mix types representing the mix of different pairs of various precipitation types.

In another embodiment, the precipitation type is not selected by the PType selector/receiver but instead is received from a source outside the nowcaster. In other words, the nowcaster 200 may request to a remote source (e.g., a third-party weather service) identification of the precipitation type that is most likely to occur for a given location at a given time and receive a response from the source identifying the most likely precipitation type. In this case, selection of the precipitation type is not performed by the nowcaster. The nowcaster merely is inputted with the already-selected precipitation type and thereby can save computational power of the nowcaster that would otherwise have been needed to perform the selection.

The selected precipitation type and the PRate values respectively output by the PType selector/receiver and the PRate distribution forecaster are combined. For example, if the selected precipitation type is snow, and the PRate values are as described above, the combined information would indicate:
1) No Snow: 30%
2) Light Snow: 40%
3) Moderate Snow: 20%
4) Heavy Snow: 10%.

As only one precipitation type is concerned, only minimal amount of computational power is needed to perform the combining to output the final weather forecast data. Since the PType selector/receiver will output one (1) precipitation type for a given location and time, if the PRate distribution forecaster outputs a number m of probability distribution, the final weather forecast data will comprise only a number m (m^{∗}1) of weather forecast distribution.

In outputting the final weather forecast data, it is possible to associate probability ranges with textual information for displaying the textual information to the user instead of the probabilities in numbers, similar to the embodiment shown in Figure 2. For example, probabilities that are between 5% and 15% may be associated with the text: "low chance," while probabilities that are between 40% and 70% may be associated with the text "high chance," or "very likely," etc. whereby, instead of displaying: "60% chance of heavy snow," it is possible to display: "high chance of heavy snow." As will be appreciated by a person of ordinary skill in the art, there can be many other variations than the examples provided herein.

Accordingly, the nowcaster receives the location for which the nowcasts are needed and the time and/or time interval for which the nowcasts are needed and outputs the selected PType and PRate distribution for the given location and for the specific time.

The nowcaster according to this another embodiment of the nowcaster may be advantageous over the embodiment shown in Figure 2B in certain circumstances in which efficiency is desired. This another embodiment can be implemented using much less processing power than the embodiment of Figure 2B. However, the embodiment of Figure 2B may be more suitable than this another embodiment described above in providing more detailed and accurate snapshot of weather forecast data for any given location and time.

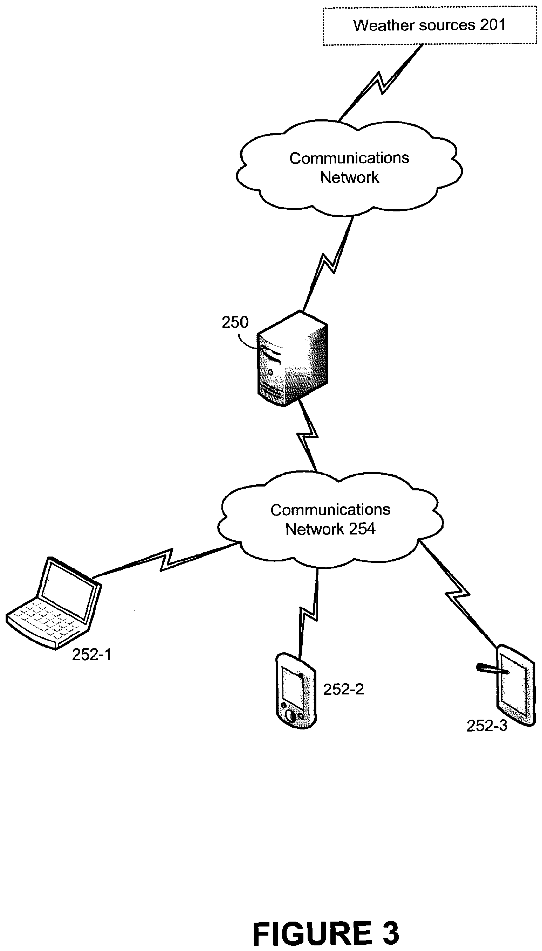

Figure 3 is an example of a network environment in which the embodiments may be practiced. The nowcaster **200** may be implemented on a server **250** which is accessible by a plurality of client computers **252** over a communication network **254.** The client computers **252** may include but not limited to: laptops, desktops, portable computing devices, tablets and the like. Using a client computer **252,** each user may select the chosen time increment **100** and view the displayed forecasted weather values. The server accesses weather source **201** over a telecommunications network as discussed in connection with Figure 2B. The server **250** may have map data stored thereon.

According to an embodiment, the client computers **252** may be used for localization to provide weather forecasts for an appropriate given territory, which can be the current location of the user. This localization may occur through a computing device which is enabled for localization or through a GPS navigation device.

The client computer **252** should comprise a user interface, such as a screen, to allow the output **140** of the weather forecast. On the user interface, the user is able to choose a time increment **100.**

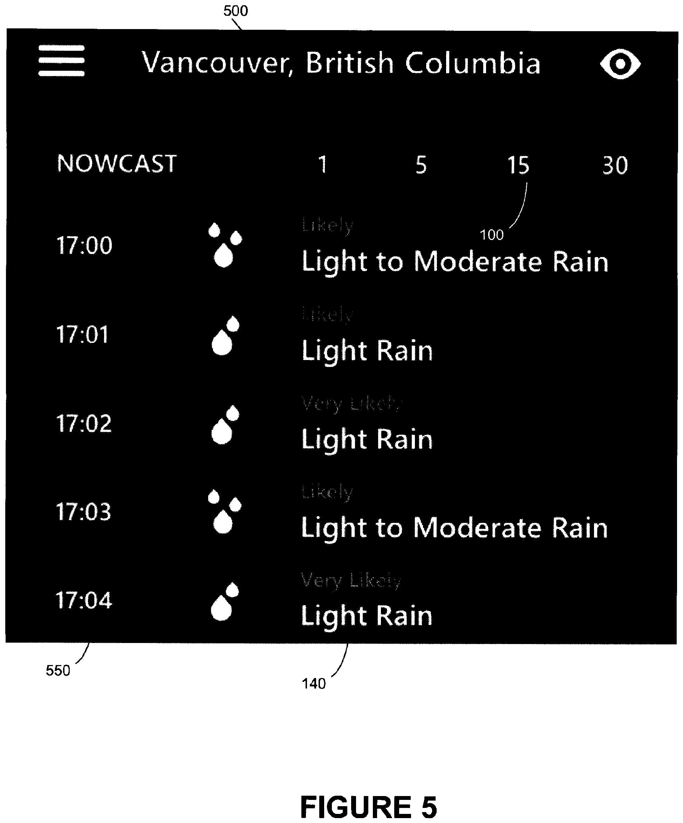

Figure 5 is a screenshot of a user interface illustrating the presenting **150** of a succession weather forecasts displayed with a default one-minute time increment according to an embodiment. The highlighted number illustrates the time increment **100** that has been chosen by the user. Since the number one is highlighted, the weather forecast displayed in Figure 5 ("no rain" in this example) is displayed with a one-minute time increment. The succession of weather forecasts is related to location **500** and times **550.**

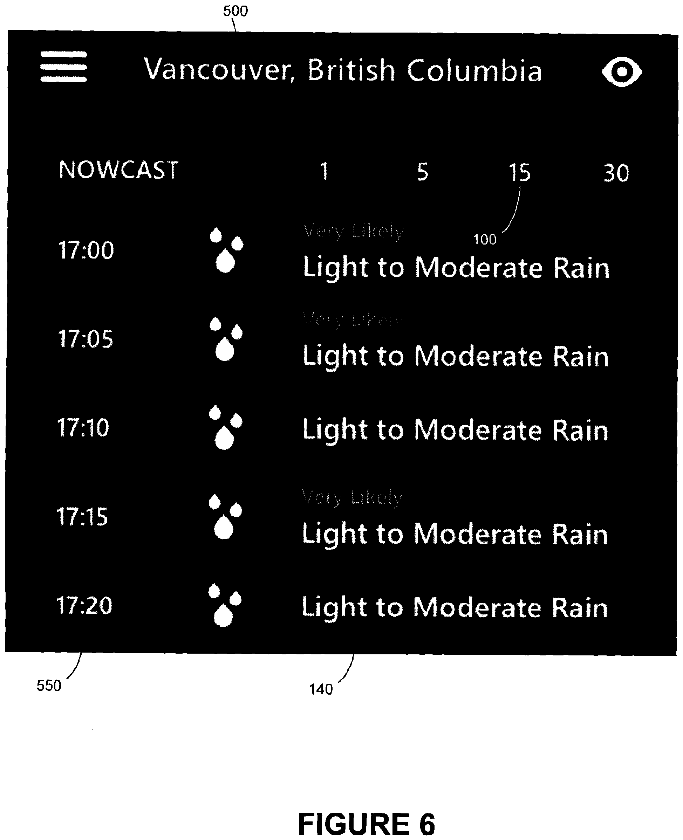

Figure 6 is a screenshot of a user interface illustrating an output **140** of a succession weather forecasts displayed with a five-minute time increment according to an embodiment. As in Figure 5, the highlighted number illustrates the time increment **100** that has been chosen by the user. Since the number five is highlighted, the weather forecast displayed in Figure 6 ("no rain" in this example) is displayed with a five-minute time increment. The succession of weather forecasts is related to location **500** and times **550.**

### HARDWARE AND OPERATING ENVIRONMENT

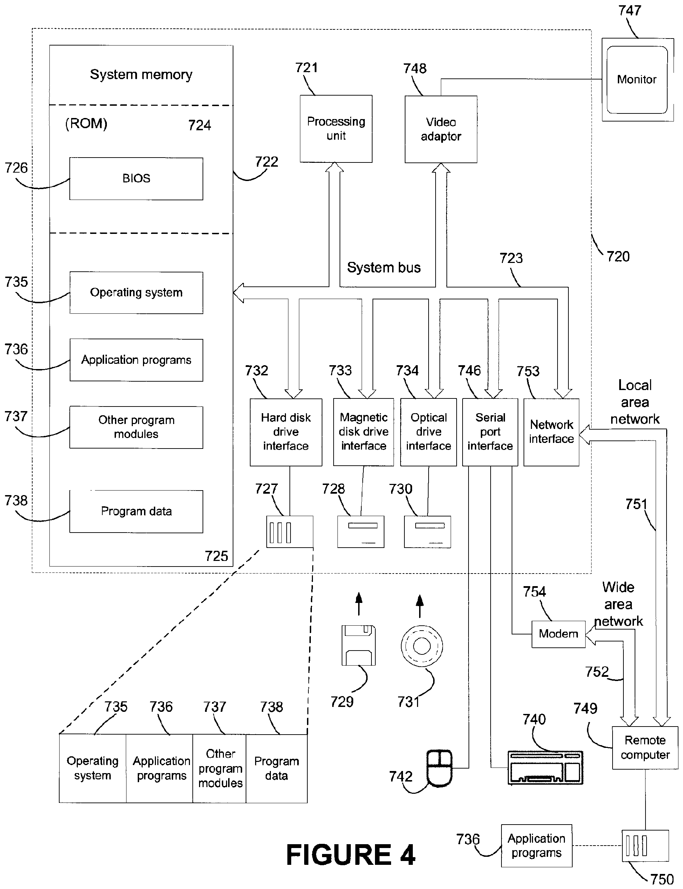

Figure 4 illustrates an exemplary diagram of a suitable computing operating environment in which embodiments of the invention may be practiced. The following description is associated with Figure 4 and is intended to provide a brief, general description of suitable computer hardware and a suitable computing environment in conjunction with which the embodiments may be implemented. Not all the components are required to practice the embodiments, and variations in the arrangement and type of the components may be made without departing from the spirit or scope of the embodiments.

Although not required, the embodiments are described in the general context of computer-executable instructions, such as program modules, being executed by a computer, such as a personal computer, a hand-held or palm-size computer, Smartphone, or an embedded system such as a computer in a consumer device or specialized industrial controller. Generally, program modules include routines, programs, objects, components, data structures, etc., that perform particular tasks or implement particular abstract data types.

Moreover, those skilled in the art will appreciate that the embodiments may be practiced with other computer system configurations, including hand-held devices, multiprocessor systems, microprocessor-based or programmable consumer electronics, network PCS, minicomputers, mainframe computers, cellular telephones, smart phones, display pagers, radio frequency (RF) devices, infrared (IR) devices, Personal Digital Assistants (PDAs), laptop computers, wearable computers, tablet computers, a device of the IPOD or IPAD family of devices manufactured by Apple Computer, integrated devices combining one or more of the preceding devices, or any other computing device capable of performing the methods and systems described herein. The embodiments may also be practiced in distributed computing environments where tasks are performed by remote processing devices that are linked through a communications network. In a distributed computing environment, program modules may be located in both local and remote memory storage devices.

The exemplary hardware and operating environment of Figure 4 includes a general purpose computing device in the form of a computer **720,** including a processing unit **721,** a system memory **722,** and a system bus **723** that operatively couples various system components including the system memory to the processing unit **721.** There may be only one or there may be more than one processing unit **721,** such that the processor of computer **720** comprises a single central-processing unit (CPU), or a plurality of processing units, commonly referred to as a parallel processing environment. The computer **720** may be a conventional computer, a distributed computer, or any other type of computer; the embodiments are not so limited.

The system bus **723** may be any of several types of bus structures including a memory bus or memory controller, a peripheral bus, and a local bus using any of a variety of bus architectures. The system memory may also be referred to as simply the memory, and includes read only memory (ROM) **724** and random access memory (RAM) **725.** A basic input/output system (BIOS) 726, containing the basic routines that help to transfer information between elements within the computer **720,** such as during start-up, is stored in ROM **724.** In one embodiment of the invention, the computer **720** further includes a hard disk drive **727** for reading from and writing to a hard disk, not shown, a magnetic disk drive **728** for reading from or writing to a removable magnetic disk **729,** and an optical disk drive **730** for reading from or writing to a removable optical disk **731** such as a CD ROM or other optical media. In alternative embodiments of the invention, the functionality provided by the hard disk drive **727,** magnetic disk **729** and optical disk drive **730** is emulated using volatile or non-volatile RAM in order to conserve power and reduce the size of the system. In these alternative embodiments, the RAM may be fixed in the computer system, or it may be a removable RAM device, such as a Compact Flash memory card.

In an embodiment of the invention, the hard disk drive **727,** magnetic disk drive **728,** and optical disk drive **730** are connected to the system bus **723** by a hard disk drive interface **732,** a magnetic disk drive interface **733,** and an optical disk drive interface **734,** respectively. The drives and their associated computer-readable media provide nonvolatile storage of computer-readable instructions, data structures, program modules and other data for the computer **720.** It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), and the like, may be used in the exemplary operating environment.

A number of program modules may be stored on the hard disk, magnetic disk **729,** optical disk **731,** ROM **724,** or RAM **725,** including an operating system **735,** one or more application programs **736,** other program modules **737,** and program data **738.** A user may enter commands and information into the personal computer **720** through input devices such as a keyboard **740** and pointing device **742.** Other input devices (not shown) may include a microphone, joystick, game pad, satellite dish, scanner, touch sensitive pad, or the like. These and other input devices are often connected to the processing unit **721** through a serial port interface 746 that is coupled to the system bus, but may be connected by other interfaces, such as a parallel port, game port, or a universal serial bus (USB). In addition, input to the system may be provided by a microphone to receive audio input.

A monitor **747** or other type of display device is also connected to the system bus **723** via an interface, such as a video adapter **748.** In one embodiment of the invention, the monitor comprises a Liquid Crystal Display (LCD). In addition to the monitor, computers typically include other peripheral output devices (not shown), such as speakers and printers. The monitor may include a touch sensitive surface which allows the user to interface with the computer by pressing on or touching the surface.

The computer **720** may operate in a networked environment using logical connections to one or more remote computers, such as a remote computer **749.** These logical connections are achieved by a communication device coupled to or a part of the computer **720;** the embodiment is not limited to a particular type of communications device. The remote computer **749** may be another computer, a server, a router, a network PC, a client, a peer device or other common network node, and typically includes many or all of the elements described above relative to the computer **720,** although only a memory storage device **750** has been illustrated in Figure 6. The logical connections depicted in Figure 6 include a local-area network (LAN) **751** and a wide-area network (WAN) **752.** Such networking environments are commonplace in offices, enterprise-wide computer networks, intranets and the Internet.

When used in a LAN-networking environment, the computer **720** is connected to the local network **751** through a network interface or adapter **753,** which is one type of communications device. When used in a WAN-networking environment, the computer **720** typically includes a modem **754,** a type of communications device, or any other type of communications device for establishing communications over the wide area network **752,** such as the Internet. The modem **754,** which may be internal or external, is connected to the system bus **723** via the serial port interface **746.** In a networked environment, program modules depicted relative to the personal computer **720,** or portions thereof, may be stored in the remote memory storage device. It is appreciated that the network connections shown are exemplary and other means of and communications devices for establishing a communications link between the computers may be used.

The hardware and operating environment in conjunction with which embodiments of the invention may be practiced has been described. The computer in conjunction with which embodiments of the invention may be practiced may be a conventional computer a hand-held or palm-size computer, a computer in an embedded system, a distributed computer, or any other type of computer; the invention is not so limited. Such a computer typically includes one or more processing units as its processor, and a computer-readable medium such as a memory. The computer may also include a communications device such as a network adapter or a modem, so that it is able to communicatively couple other computers.

## Claims

1. A computer implemented method for outputting a chronological succession of weather forecasts starting at a given time, over a given period, and for a given territory, the method comprising:
receiving forecasted weather values (120) prepared by a weather value forecaster, the forecasted weather values for default time periods separated by a default time increment, wherein each of the forecasted weather values of the default time periods indicates a rate of a specific precipitation type predicted to occur during the corresponding default time period;
receiving a chosen time increment (100) from a user, the chosen time increment defining a succession of chosen time periods starting at the given time and separated by the chosen time increment, the chosen time increment being longer than the default time increment such that each chosen time period includes a plurality of default time periods;
generating (110) a forecasted weather value for each chosen time period by aggregating (130) the forecasted weather values for the plurality of default time periods included in the chosen time period; and
outputting (140) the forecasted weather values for the succession of chosen time periods.

2. The method of claim 1, wherein outputting (140) the forecasted weather values for the succession of chosen time periods comprises presenting the forecasted weather values for the succession of chosen time periods to the user.

3. The method of any of claims 1-2, wherein receiving the chosen time increment comprises receiving a time increment saved from a previous use.

4. The method of any of claims 1-3, wherein the chosen time increment is 1 minute, 5 minutes, 15 minutes or 30 minutes.

5. The method of any of claims 1-4, wherein the chosen time increment is variable over the given period.

6. The method of any of claims 1-5, wherein the given time is a current time.

7. The method of any of claims 1-6, wherein the given territory has an area ranging between 5 meters and 1,000 meters.

8. The method of claim 7, wherein the given territory comprises a current location of the user.

9. The method of claim 8, further comprising determining the current location of the user based on data from a communication network or a global positioning system (GPS) device.

10. The method of any of claims 1-9, wherein the chosen time increment corresponds to a real number.

11. The method of any of claims 1-10, wherein outputting the forecasted weather values for the succession of chosen time periods over a given period smaller than 6 hours.

12. The method of any of claims 1-11, wherein, for each default time period, the forecasted weather value for the default time period is generated by:
obtaining a weather forecast value comprising a probability that the specific precipitation type will occur during the default time period;
generating probabilities that precipitation will occur at each of a plurality of precipitation rates during the default time period;
combining the probability that the specific precipitation type will occur and the probabilities that precipitation will occur at each of the precipitation rates to produce probabilities that the specific precipitation type will occur at each of the precipitation rates; and
outputting the probability that the specific precipitation type will occur at one of the plurality of precipitation rates.

13. A device (200) for outputting a chronological succession of weather forecasts starting at a given time, over a given period, and for a given territory, the device comprising:
one or more processors (210);
a memory (220) storing instructions for the one or more processors, wherein when the instructions are executed by the one or more processors, the device is caused to:
receive forecasted weather values (120), prepared by a weather value forecaster, the forecasted weather values for default time periods separated by a default time increment, wherein each of the forecasted weather values of the default time periods indicates a rate of a specific precipitation type predicted to occur during the corresponding default time period;
receive a chosen time increment (100) from a user, the chosen time increment defining a succession of chosen time periods starting at the given time and separated by the chosen time increment, the chosen time increment being longer than the default time increment such that each chosen time period includes a plurality of default time periods;
generate a forecasted weather value for each chosen time period by aggregating the forecasted weather values for the plurality of default time periods included in the chosen time period; and
output the forecasted weather value for each chosen time period.

14. The device of claim 13, wherein, for each default time period, the forecasted weather value for the default time period is generated by:
obtaining a weather forecast value comprising a probability that the specific precipitation type will occur during the default time period;
generating probabilities that precipitation will occur at each of a plurality of precipitation rates during the default time period;
combining the probability that the specific precipitation type will occur and the probabilities that precipitation will occur at each of the precipitation rates to produce probabilities that the specific precipitation type will occur at each of the precipitation rates; and
outputting the probability that the specific precipitation type will occur at one of the plurality of precipitation rates.

15. A non-transitory computer-readable medium comprising instructions that, when executed by a processor, cause it to carry out the method of any of claims 1-12.

## Patentansprüche

1. Computerimplementiertes Verfahren zur Ausgabe einer chronischen Abfolge von Wettervorhersagen, die zu einer gegebenen Zeit beginnt, über einen gegebenen Zeitraum, und für ein gegebenes Gebiet, wobei das Verfahren Folgendes umfasst:
Empfangen von vorhergesagten Wetterwerten (120), die durch einen Wetterwertvorhersager vorbereitet werden, wobei die vorhergesagten Wetterwerte für Standardzeiträume durch eine Standartzeitschrittweite getrennt sind, wobei jeder der vorhergesagten Wetterwerte der Standardzeiträume eine Rate einer spezifischen Niederschlagsart angibt, deren Auftreten während des entsprechenden Standardzeitraums vorhergesagt wird;
Empfangen einer gewählten Zeitschrittweite (100) von einem Benutzer, wobei die gewählte Zeitschrittweite eine Abfolge von gewählten Zeiträumen definiert, beginnend zu der gegebenen Zeit und getrennt durch die gegebene Zeitschrittweite, wobei die gewählte Zeitschrittweite länger als die Standardzeitschrittweite ist, sodass jeder gewählte Zeitraum eine Vielzahl von Standardzeiträumen beinhaltet;
Erzeugen (110) eines vorhergesagten Wetterwertes für jeden gewählten Zeitraum durch Aggregieren (130) der vorhergesagten Wetterwerte für die Vielzahl von Standardzeiträumen, die in dem gewählten Zeitraum enthalten ist; und
Ausgeben (140) der vorhergesagten Wetterwerte für die Abfolge von gewählten Zeiträumen.

2. Verfahren nach Anspruch 1, wobei das Ausgeben (140) der vorhergesagten Wetterwerte für die Abfolge von gewählten Zeiträumen umfasst, die vorhergesagten Wetterwerte für die Abfolge von gewählten Zeiträumen dem Benutzer zu präsentieren.

3. Verfahren nach einem der Ansprüche 1-2, wobei das Empfangen der gewählten Zeitschrittweite das Empfangen einer von einer vorherigen Verwendung gespeicherten Zeitschrittweite umfasst.

4. Verfahren nach einem der Ansprüche 1-3, wobei die gewählte Zeitschrittweite 1 Minute, 5 Minuten, 15 Minuten oder 30 Minuten ist.

5. Verfahren nach einem der Ansprüche 1-4, wobei die gewählte Zeitschrittweite über den gegebenen Zeitraum variabel ist.

6. Verfahren nach einem der Ansprüche 1-5, wobei die gegebene Zeit eine aktuelle Zeit ist.

7. Verfahren nach einem der Ansprüche 1-6, wobei das gegebene Gebiet einen Bereich aufweist, der von 5 Metern bis 1.000 Meter reicht.

8. Verfahren nach Anspruch 7, wobei das gegebene Gebiet einen aktuellen Standort des Benutzers umfasst.

9. Verfahren nach Anspruch 8, ferner umfassend das Bestimmen des aktuellen Standortes des Benutzers basierend auf Daten von einem Kommunikationsnetzwerk oder einer globalen Positionierungssystem-(GPS-)Vorrichtung.

10. Verfahren nach einem der Ansprüche 1-9, wobei die gewählte Zeitschrittweite einer echten Zahl entspricht.

11. Verfahren nach einem der Ansprüche 1-10, wobei das Ausgeben der vorhergesagten Wetterwerte für die Abfolge von gewählten Zeiträumen über einen gegebenen Zeitraum von weniger als 6 Stunden ist.

12. Verfahren nach einem der Ansprüche 1-11, wobei für jeden Standardzeitraum der vorhergesagte Wetterwert für den Standardzeitraum durch Folgendes erzeugt wird:
Erhalten eines Wettervorhersagewertes, der eine Wahrscheinlichkeit umfasst, dass die spezifische Niederschlagsart während des Standardzeitraums auftreten wird;
Erzeugen von Wahrscheinlichkeiten, dass Niederschlag bei jeder aus einer Vielzahl von Niederschlagsraten während des Standardzeitraums auftreten wird;
Kombinieren der Wahrscheinlichkeit, dass die spezifische Niederschlagsart auftreten wird, und der Wahrscheinlichkeiten, dass Niederschlag bei jeder der Niederschlagsraten auftreten wird, um Wahrscheinlichkeiten zu erzeugen, dass die spezifische Niederschlagsart bei jeder der Niederschlagsraten auftreten wird; und
Ausgeben der Wahrscheinlichkeit, dass die spezifische Niederschlagsart bei einer aus der Vielzahl von Niederschlagsraten auftreten wird.

13. Vorrichtung (200) zur Ausgabe einer chronologischen Abfolge von Wettervorhersagen, die zu einer gegebenen Zeit beginnt, über einen gegebenen Zeitraum, und für ein gegebenes Gebiet, wobei die Vorrichtung Folgendes umfasst:
einen oder mehrere Prozessoren (210);
einen Speicher (220), in dem Anweisungen für den einen oder die mehreren Prozessoren gespeichert sind, wobei die Vorrichtung, wenn die Anweisungen durch den einen oder die mehreren Prozessoren ausgeführt werden, zu Folgendem veranlasst wird:
Empfangen von vorhergesagten Wetterwerten (120), die durch einen Wetterwertvorhersager vorbereitet werden, wobei die vorhergesagten Wetterwerte für Standardzeiträume durch eine Standartzeitschrittweite getrennt sind, wobei jeder der vorhergesagten Wetterwerte der Standardzeiträume eine Rate einer spezifischen Niederschlagsart angibt, deren Auftreten während des entsprechenden Standardzeitraums vorhergesagt wird;
Empfangen einer gewählten Zeitschrittweite (100) von einem Benutzer, wobei die gewählte Zeitschrittweite eine Abfolge von gewählten Zeiträumen definiert, beginnend zu der gegebenen Zeit und getrennt durch die gegebene Zeitschrittweite, wobei die gewählte Zeitschrittweite länger als die Standardzeitschrittweite ist, sodass jeder gewählte Zeitraum eine Vielzahl von Standardzeiträumen beinhaltet;
Erzeugen eines vorhergesagten Wetterwertes für jeden gewählten Zeitraum durch Aggregieren der vorhergesagten Wetterwerte für die Vielzahl von Standardzeiträumen, die in dem gewählten Zeitraum enthalten ist; und
Ausgeben der vorhergesagten Wetterwerte für jeden gewählten Zeitraum.

14. Vorrichtung nach Anspruch 13, wobei für jeden Standardzeitraum der vorhergesagte Wetterwert für den Standardzeitraum durch Folgendes erzeugt wird:
Erhalten eines Wettervorhersagewertes, der eine Wahrscheinlichkeit umfasst, dass die spezifische Niederschlagsart während des Standardzeitraums auftreten wird;
Erzeugen von Wahrscheinlichkeiten, dass Niederschlag bei jeder aus einer Vielzahl von Niederschlagsraten während des Standardzeitraums auftreten wird;
Kombinieren der Wahrscheinlichkeit, dass die spezifische Niederschlagsart auftreten wird, und der Wahrscheinlichkeiten, dass Niederschlag bei jeder der Niederschlagsraten auftreten wird, um Wahrscheinlichkeiten zu erzeugen, dass die spezifische Niederschlagsart bei jeder der Niederschlagsraten auftreten wird; und
Ausgeben der Wahrscheinlichkeit, dass die spezifische Niederschlagsart bei einer aus der Vielzahl von Niederschlagsraten auftreten wird.

15. Nichtflüchtiges computerlesbares Medium, das Anweisungen umfasst, die, wenn sie durch einen Prozessor ausgeführt werden, diesen dazu veranlassen, das Verfahren nach einem der Ansprüche 1-12 durchzuführen.

## Revendications

1. Procédé mis en œuvre par ordinateur pour émettre en sortie une succession chronologique de prévisions météorologiques commençant à un moment donné, sur une période donnée, et pour un territoire donné, le procédé comprenant :
la réception de valeurs météorologiques prévues (120) préparées par un prévisionniste de valeurs météorologiques,
les valeurs météorologiques prévues pour des périodes de temps par défaut séparées par un incrément de temps par défaut, dans lequel chacune des valeurs météorologiques prévues des périodes de temps par défaut indique un taux d'un type de précipitation spécifique prédit pour avoir lieu durant la période de temps par défaut correspondante ;
la réception d'un incrément de temps choisi (100) d'un utilisateur, l'incrément de temps choisi définissant une succession de périodes de temps choisies commençant au moment donné et séparées par l'incrément de temps choisi, l'incrément de temps choisi étant plus long que l'incrément de temps par défaut de sorte que chaque période de temps choisie comprend une pluralité de périodes de temps par défaut ;
la génération (110) d'une valeur météorologique prévue pour chaque période de temps choisie par l'agrégation (130) des valeurs météorologiques prévues pour la pluralité de périodes de temps par défaut comprises dans la période de temps choisie ; et
l'émission en sortie (140) des valeurs météorologiques prévues pour la succession de périodes de temps choisies.

2. Procédé selon la revendication 1, dans lequel l'émission en sortie (140) des valeurs météorologiques prévues pour la succession de périodes de temps choisies comprend la présentation des valeurs météorologiques prévues pour la succession de périodes de temps choisies à l'utilisateur.

3. Procédé selon l'une quelconque des revendications 1 et 2, dans lequel la réception de l'incrément de temps choisi comprend la réception d'un incrément de temps sauvegardé depuis une utilisation précédente.

4. Procédé selon l'une quelconque des revendications 1 à 3, dans lequel l'incrément de temps choisi est 1 minute, 5 minutes, 15 minutes ou 30 minutes.

5. Procédé selon l'une quelconque des revendications 1 à 4, dans lequel l'incrément de temps choisi est variable sur la période donnée.

6. Procédé selon l'une quelconque des revendications 1 à 5, dans lequel le moment donné est un moment actuel.

7. Procédé selon l'une quelconque des revendications 1 à 6, dans lequel le territoire donné possède une zone comprise entre 5 mètres et 1 000 mètres.

8. Procédé selon la revendication 7, dans lequel le territoire donné comprend une localisation actuelle de l'utilisateur.

9. Procédé selon la revendication 8, comprenant en outre la détermination de la localisation actuelle de l'utilisateur sur la base de données en provenance d'un réseau de communication ou d'un dispositif GPS (système de géolocalisation).

10. Procédé selon l'une quelconque des revendications 1 à 9, dans lequel l'incrément de temps choisi correspond à un nombre réel.

11. Procédé selon l'une quelconque des revendications 1 à 10, dans lequel l'émission en sortie des valeurs météorologiques prévues pour la succession de périodes de temps choisies sur une période donnée est inférieure à 6 heures.

12. Procédé selon l'une quelconque des revendications 1 à 11, dans lequel, pour chaque période de temps par défaut, la valeur météorologique prévue pour la période de temps par défaut est générée par :
l'obtention d'une valeur de prévision météorologique comprenant une probabilité que le type de précipitation spécifique ait lieu durant la période de temps par défaut ;
la génération de probabilités qu'une précipitation ait lieu à chacun d'une pluralité de taux de précipitation durant la période de temps par défaut ;
la combinaison de la probabilité que le type de précipitation spécifique ait lieu et des probabilités qu'une précipitation ait lieu à chacun des taux de précipitation pour produire des probabilités que le type de précipitation spécifique ait lieu à chacun des taux de précipitation ; et
l'émission en sortie de la probabilité que le type de précipitation spécifique ait lieu à l'un de la pluralité de taux de précipitation.

13. Dispositif (200) pour émettre en sortie une succession chronologique de prévisions météorologiques commençant à un moment donné, sur une période donnée, et pour un territoire donné, le dispositif comprenant :
un ou plusieurs processeurs (210) ;
une mémoire (220) stockant des instructions pour les un ou plusieurs processeurs, dans lequel, lorsque les instructions sont exécutées par les un ou plusieurs processeurs, le dispositif est amené à :
recevoir des valeurs météorologiques prévues (120), préparées par un prévisionniste de valeurs météorologiques, les valeurs météorologiques prévues pour des périodes de temps par défaut séparées par un incrément de temps par défaut, dans lequel chacune des valeurs météorologiques prévues des périodes de temps par défaut indique un taux d'un type de précipitation spécifique prédit pour avoir lieu durant la période de temps par défaut correspondante ;
recevoir un incrément de temps choisi (100) d'un utilisateur, l'incrément de temps choisi définissant une succession de périodes de temps choisies commençant au moment donné et séparées par l'incrément de temps choisi, l'incrément de temps choisi étant plus long que l'incrément de temps par défaut de sorte que chaque période de temps choisie comprend une pluralité de périodes de temps par défaut ;
générer une valeur météorologique prévue pour chaque période de temps choisie par l'agrégation des valeurs météorologiques prévues pour la pluralité de périodes de temps par défaut comprises dans la période de temps choisie ; et
émettre en sortie la valeur météorologique prévue pour chaque période de temps choisie.

14. Dispositif selon la revendication 13, dans lequel, pour chaque période de temps par défaut, la valeur météorologique prévue pour la période de temps par défaut est générée par :
l'obtention d'une valeur de prévision météorologique comprenant une probabilité que le type de précipitation spécifique ait lieu durant la période de temps par défaut ;
la génération de probabilités qu'une précipitation ait lieu à chacun d'une pluralité de taux de précipitation durant la période de temps par défaut ;
la combinaison de la probabilité que le type de précipitation spécifique ait lieu et des probabilités qu'une précipitation ait lieu à chacun des taux de précipitation pour produire des probabilités que le type de précipitation spécifique ait lieu à chacun des taux de précipitation ; et
l'émission en sortie de la probabilité que le type de précipitation spécifique ait lieu à l'un de la pluralité de taux de précipitation.

15. Support lisible par ordinateur non transitoire comprenant des instructions qui, lorsqu'elles sont exécutées par un processeur, font en sorte que celui-ci mette en œuvre le procédé selon l'une quelconque des revendications 1 à 12.
